# EUROPEAN PATENT APPLICATION

(11) **EP 4 679 866 A1**
(43) Date of publication of application: **14.01.2026**
(21) Application number: 24784873.2
(22) Date of filing: 01.04.2024
(51) Int. Cl.: H04W 4/06, H04W 68/10, H04W 72/231, H04W 76/27

(54) **COMMUNICATION METHOD AND USER DEVICE**

(30) Priority: 05.04.2023 US 202363494316 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2024/013446
(87) International publication number: WO 2024/210088

(57) **Abstract**

A communication method performed by a user equipment in a mobile communication system that provides a multicast/broadcast service (MBS) includes receiving a first PTM configuration from a network, the first PTM configuration being used for reception of a multicast session in a Radio Resource Control (RRC) inactive state, and holding the first PTM configuration, determining, in the RRC inactive state, whether the first PTM configuration needs to be updated in response to reception of a paging message from the network, the paging message including a session identifier of the multicast session, and acquiring, in the RRC inactive state, a second PTM configuration used for reception of the multicast session by receiving a multicast control channel (MCCH) for multicast communication in response to determination that the first PTM configuration needs to be updated.

## Description

### TECHNICAL FIELD

The present disclosure relates to a communication method and a user equipment used in a mobile communication system.

### BACKGROUND OF INVENTION

The 3rd Generation Partnership Project (3GPP) has defined the technical specifications of New Radio (NR) that is a radio access technology of the fifth generation (5G). NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of 5G/NR.

In 3GPP Release 17, MBS multicast reception (i.e., multicast reception) is possible only for a user equipment in a radio resource control (RRC) connected state (see, for example, Non-Patent Document 1). On the other hand, in 3GPP Release 18, technical specifications are scheduled to be extended so that a user equipment in an RRC inactive state can perform multicast reception.

### CITATION LIST

### NON-PATENT LITERATURE

Non-Patent Document 1: 3GPP Technical Specification: TS 38.300 V17.3.0

### SUMMARY

A communication method according to a first aspect is a communication method performed by a user equipment in a mobile communication system that provides a multicast/broadcast service (MBS). The communication method includes determining, in a Radio Resource Control (RRC) inactive state, whether a predetermined condition is satisfied in response to reception of a paging message from the network, the paging message including a session identifier of a multicast session, and acquiring, in the RRC inactive state, configuration information used for reception of the multicast session in the RRC inactive state by receiving a multicast control channel (MCCH) for multicast communication in response to the predetermined condition being satisfied.

A communication method according to a second aspect is a method performed by a user equipment in a mobile communication system that provides a multicast/broadcast service (MBS). The communication method includes receiving a first PTM configuration from a network, the first PTM configuration being used for reception of a multicast session in a Radio Resource Control (RRC) inactive state, and holding the first PTM configuration, determining, in the RRC inactive state, whether the first PTM configuration needs to be updated in response to reception of a paging message from the network, the paging message including a session identifier of the multicast session, and acquiring, in the RRC inactive state, a second PTM configuration used for reception of the multicast session by receiving a multicast control channel (MCCH) for multicast communication in response to determination that the first PTM configuration needs to be updated.

A user equipment according to a third aspect is a device used in a mobile communication system that provides a multicast/broadcast service (MBS). The user equipment includes a controller configured to perform processing of receiving a first PTM configuration from a network, the first PTM configuration being used for reception of a multicast session in a Radio Resource Control (RRC) inactive state, and holding the first PTM configuration, processing of determining, in the RRC inactive state, whether the first PTM configuration needs to be updated in response to reception of a paging message from the network, the paging message including a session identifier of the multicast session, and processing of acquiring, in the RRC inactive state, a second PTM configuration used for reception of the multicast session by receiving a multicast control channel (MCCH) for multicast communication in response to determination that the first PTM configuration needs to be updated.

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to an embodiment.
FIG. 3 is a diagram illustrating a configuration example of a base station (gNB) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of an operation of the UE related to a first operation pattern according to an embodiment.
FIG. 7 is a diagram illustrating an example of an operation sequence of the mobile communication system related to the first operation pattern according to an embodiment.
FIG. 8 is a diagram illustrating an overview of an operation of the UE related to a second operation pattern according to an embodiment.
FIG. 9 is a diagram illustrating an example of an operation sequence of the mobile communication system related to the second operation pattern according to an embodiment.
FIG. 10 is a diagram illustrating an overview of an operation of the UE related to a third operation pattern according to an embodiment.
FIG. 11 is a diagram illustrating an example of a first operation example of the third operation pattern according to an embodiment.
FIG. 12 is a diagram illustrating another example of the first operation example of the third operation pattern according to an embodiment.
FIG. 13 is a diagram illustrating an example of a second operation example of the third operation pattern according to an embodiment.
FIG. 14 is a diagram illustrating another example of the second operation example of the third operation pattern according to an embodiment.

### DESCRIPTION OF EMBODIMENTS

A mobile communication system according to an embodiment is described with reference to the drawings. In the description of the drawings, the same or similar parts are denoted by the same or similar reference signs.

### (1) System Configuration Example

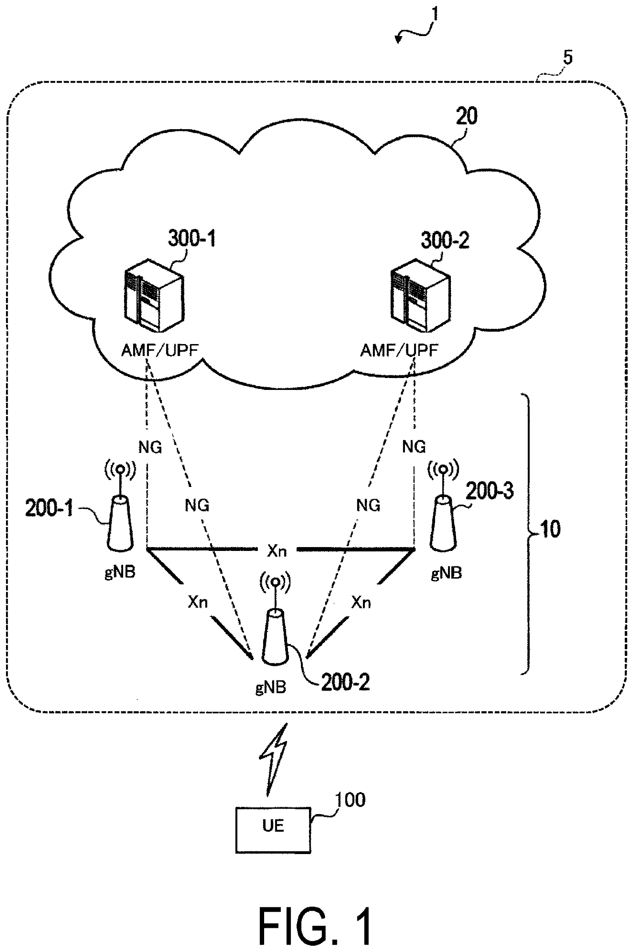

FIG. 1 is a diagram illustrating a configuration example of a mobile communication system 1 according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 constitute a network of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility control and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

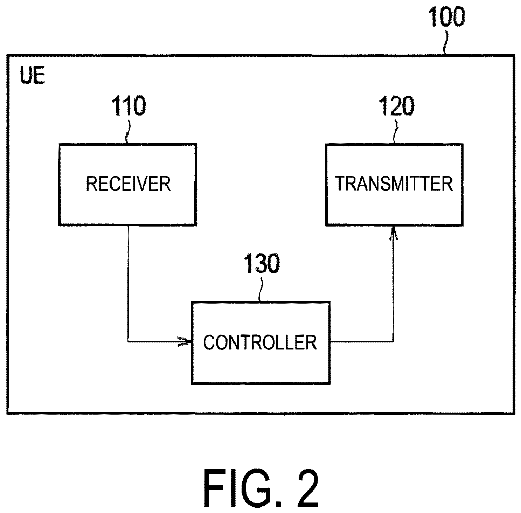

FIG. 2 is a diagram illustrating a configuration example of the user equipment (UE) 100 according to an embodiment. The UE 100 includes a receiver 110, a transmitter 120, and a controller 130. The receiver 110 and the transmitter 120 constitute a wireless communicator that performs wireless communication with the gNBs 200.

The receiver 110 performs various type of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal from the antenna.

The controller 130 performs various types of control and processing in the UE 100. Such processing includes processing of respective layers to be described below. The operations of the UE 100 described above and below may be operations under control of a controller 230. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

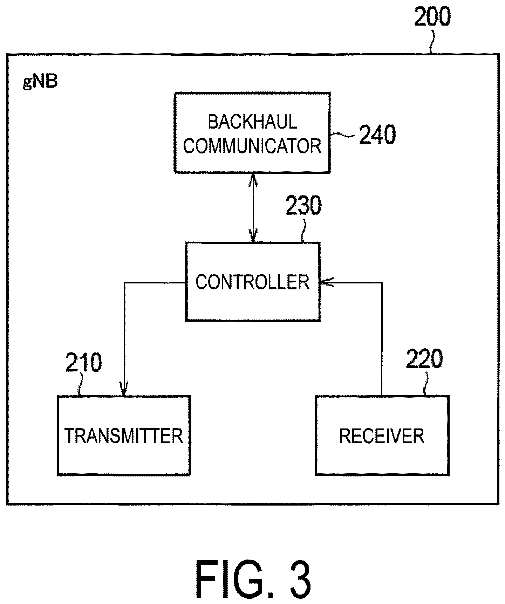

FIG. 3 is a diagram illustrating a configuration example of a gNB 200 (base station) according to an embodiment. The gNB 200 includes a transmitter 210, a receiver 220, the controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal from the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described below. The operations of the gNB 200 described above and below may also be those performed under control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface that is a base station-core network interface. Note that the gNB 200 may include a Central Unit (CU) and a Distributed Unit (DU) (i.e., functions are divided), and both units may be connected via an F1 interface that is a fronthaul interface.

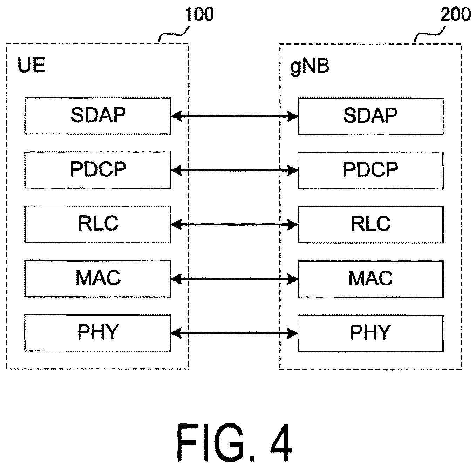

FIG. 4 is a diagram illustrating a configuration of a protocol stack of a radio interface of a user plane handling data.

A radio interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. CRC parity bits scrambled by the RNTI are added to the DCI transmitted from the gNB 200.

The MAC layer performs priority control of data, retransmission processing through Hybrid Automatic Repeat reQuest (Hybrid ARQ or HARQ), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in uplink and resource blocks to be allocated to the UE 100.

The RLC layer transmits data to the RLC layer on the receiving side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by the core network and a radio bearer as the unit of QoS control performed by an Access Stratum (AS). Note that, when the RAN is connected to the EPC, the SDAP need not be provided.

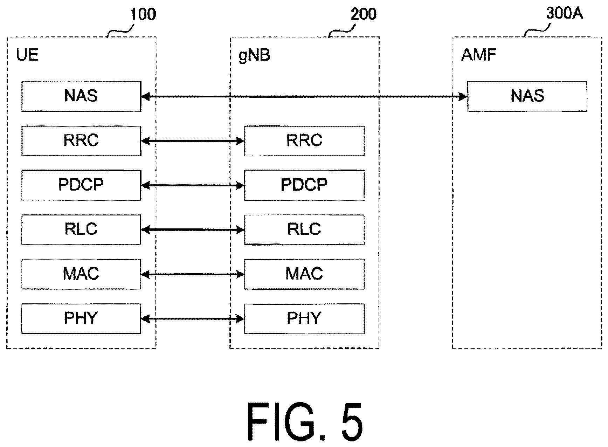

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. Note that the UE 100 includes an application layer other than the protocol of the radio interface. The layer below the NAS layer is referred to as an AS layer (also simply referred to as "AS").

### (2) Overview of MBS

The mobile communication system 1 can perform delivery with high resource efficiency by using the multicast/broadcast service (MBS).

### (2.1) MBS Broadcast

In broadcast communication services (also referred to as "MBS broadcast"), the same service and the same specific content data are provided simultaneously to every UE 100 in a geographic area. That is, every UE 100 in the broadcast service area is permitted to receive data. The broadcast communication services are delivered to the UE 100 using a broadcast session that is a type of an MBS session. The UE 100 can receive broadcast sessions in any state of the RRC idle state, the RRC inactive state, and the RRC connected state.

Point-to-Multipoint (PTM) delivery is applied to the broadcast communication services. On the other hand, for PTM transmission, the gNB 200 delivers a single copy of an MBS packet to a set (group) composed of a plurality of UEs 100. For example, the gNB 200 uses a group-common PDCCH with a Cyclic Redundancy Code (CRC) scrambled by a group RNTI (G-RNTI) that is a group-common RNTI to schedule a group-common PDSCH scrambled by the G-RNTI.

For a broadcast communication service, the UE 100 receives a broadcast session in the following procedure. First, the UE 100 receives system information block type 20 (SIB 20) from the gNB 200. The SIB 20 includes the configuration of a multicast control channel (MCCH), which is a type of logical channel. Second, the UE 100 receives the MCCH from the gNB 200 based on SIB 20. The MCCH includes a PTM configuration. The PTM configuration transmits a configuration for a Multicast Traffic Channel (MTCH), which is a type of a logical channel (MTCH configuration) and a configuration of a broadcast Multicast Radio Bearer (MRB), which is a multicast MRB for broadcast sessions. The information transmitted by the MCCH may be referred to as MBS broadcast control information. Third, the UE 100 receives the MTCH based on the MCCH. The MTCH transmits a broadcast session (specifically, MBS data belonging to a broadcast session).

Note that the MCCH is a PTM downlink channel for transmitting MBS broadcast control information associated with one or more MTCHs from the network 10 to the UE 100. The MTCH is a PTM downlink channel for transmitting MBS data of a multicast session and/or a broadcast session from the network 10 to the UE 100.

The MCCH information transmitted on the MCCH is generated at the boundary of a modification period, and the same MCCH information is repeatedly transmitted according to MCCH configuration (MCCH scheduling) within the modification period. When the network 5 changes (part of) the MCCH information, it informs the UE 100 of the change starting from the beginning of the MCCH modification period in the PDCCH (DCI) scheduling the MCCH in all repeated transmissions within the modification period.

When a UE 100 that is receiving or interested in receiving an MBS service transmitted using MBS broadcast receives such a change notification (MCCH change notification), it acquires new MCCH information starting from the same slot. The UE 100 applies the previously acquired MCCH information until it acquires new MCCH information.

The MCCH change notification is transmitted in a 2-bit bitmap. If the Most Significant Bit (MSB) of the 2-bit bitmap is set to '1', it indicates the start of a new MBS service. When the Least Significant Bit (LSB) of the 2-bit bitmap is set to '1', it indicates a modification of MCCH information other than a modification caused by the initiation of a new MBS service (e.g., activation of an MBS session), for example, a modification of configuration of an ongoing MBS session, a stop of an MBS session (specifically, a broadcast session), or a modification of neighbor cell information.

However, although one MCCH exists in a cell, MCCH information is transmitted for all MBS services (all broadcast sessions) in the cell. Therefore, the UE 100 cannot identify for which broadcast session the MCCH information has been modified based on the MCCH change notification. Therefore, even if the MCCH information of the broadcast session that the UE 100 itself does not receive or is not interested in receiving is modified, the MCCH information needs to be acquired in response to the reception of the MCCH change notification.

### (2.2) MBS Multicast

In multicast communication services (also referred to as "MBS multicast"), the same service and the same specific content data are simultaneously provided to a specific UE set. That is, not every UE 100 in the multicast service area is permitted to receive data. The multicast communication services are delivered to the UE 100 using a multicast session that is a type of an MBS session.

The UE 100 can receive a corresponding multicast session only after joining the multicast session (session join). The joining the multicast session may mean that the UE 100 is registered in the network 5 (CN 20) as being capable of receiving the multicast session.

For a multicast communication service, in 3GPP Release 17, only a UE 100 in an RRC connected state can receive a multicast session. On the other hand, 3GPP Release 18 is planned to expand such that a UE 100 in the RRC inactive state also can receive a multicast session.

### (2.2.1) Multicast Reception in RRC Connected State

The UE 100 in the RRC connected state can receive a multicast session (specifically, MBS data belonging to the multicast session) using a mechanism such as Point-to-Point (PTP) and/or Point-to-Multipoint (PTM) delivery.

For a multicast communication service, the UE 100 in the RRC connected state receives a multicast session in the following procedure. First, the UE 100 receives an RRC Reconfiguration message from the gNB 200. The RRC Reconfiguration message is a message transmitted on a Dedicated Control CHannel (DCCH). The RRC Reconfiguration message transmits a configuration (MTCH configuration) related to an MTCH for receiving the multicast session and a configuration of a multicast MRB which is an MRB for the multicast session. Second, the UE 100 receives the MTCH based on the RRC Reconfiguration message. The MTCH transmits the multicast session (specifically, MBS data belonging to the multicast session).

### (2.2.2) Multicast Reception in RRC Inactive State

The UE 100 in the RRC inactive state can receive the multicast session (particularly, the MBS data belonging to the multicast session) by using the mechanism for PTM delivery.

For a multicast communication service, the UE 100 in the RRC inactive state can receive a multicast session in the following procedure. First, the UE 100 in the RRC inactive state receives a newly introduced system information block (also referred to as a "new SIB") from the gNB 200. The new SIB includes the configuration of a newly introduced MCCH (also referred to as a "multicast MCCH"). Second, the UE 100 in the RRC inactive state receives, from the gNB 200, the multicast MCCH based on the new SIB. The multicast MCCH includes a PTM configuration. The PTM configuration transmits a configuration (MTCH configuration) related to an MTCH for receiving the multicast session and a configuration of a multicast MRB which is an MRB for the multicast session. Third the UE 100 in the RRC inactive state receives the MTCH based on the multicast MCCH. The MTCH transmits the multicast session (specifically, MBS data belonging to the multicast session).

When the gNB 200 configures the UE 100 to receive multicast in the RRC inactive state, the gNB can transmit the PTM configuration to the UE 100 using an RRC release message including a suspend configuration. In this case, when the RRC Release message including the PTM configuration is received from the gNB 200, the UE 100 transitions to the RRC inactive state and receives a multicast session in the RRC inactive state.

### (2.2.3) Group Notification

When no data to be transmitted to the UE 100 is temporarily present in the multicast session in an active state, the gNB 200 may cause the UE 100 to transition to the RRC inactive state. When the multicast session is deactivated, the gNB 200 may cause the UE 100 to transition to the RRC idle state or the RRC inactive state.

The gNB 200 that supports MBS performs a notification to the UE 100 in the RRC idle state or the RRC inactive state using a group notification mechanism when a multicast session is activated by the CN 20. The gNB 200 that supports MBS may perform a notification to the UE 100 in the RRC inactive state using a group notification mechanism when a multicast session has been activated and the gNB 200 has multicast session data to deliver.

Upon receiving the group notification, the UE 100 reconnects to the network 5 or resumes the connection to transition to the RRC connected state. The group notification is processed with a paging RNTI (P-RNTI) on the PDCCH, and the UE 100 monitors the paging channel.

A paging message used for the group notification includes session identifiers (MBS session IDs) for paging all UEs 100 in the RRC idle state and the RRC inactive state that have joined the associated MBS multicast session. That is, the UE 100 is not paged individually.

When the UE 100 transitions to the RRC connected state, the UE 100 may stop monitoring for group notification associated with a specific multicast session. That is, the UE 100 stops checking the MBS session ID in the paging message. The UE 100 does not monitor the group notification in cases where the UE 100 leaves the multicast session, the network 5 requests UE 100 to leave, or the network 5 releases the multicast session.

Note that the group notification may be performed on the MCCH or may be performed through an MCCH change notification. When the MCCH is used, it may be determined whether the MCCH has the MTCH configuration of the MBS session of interest. When the MCCH change notification is used, the group notification may be notified in a predetermined bit of the DCI.

### (3) First Operation Pattern

Hereinafter, a first operation pattern related to multicast reception in the RRC inactive state will be described.

When a multicast session is activated, that is, when a multicast session is in progress, the UE 100 in the RRC connected state is configured with the multicast MRB for multicast reception by an RRC Reconfiguration message and can start receiving the MTCH.

In multicast reception in the RRC inactive state, an MRB for multicast reception (also referred to as a "multicast inactive MRB") may be configured in the UE 100 of the RRC connected state with an RRC Release message.

When the UE 100 in the RRC connected state receives the RRC Release message including the suspend configuration (suspendConfig), the UE suspends the multicast MRB for the RRC connected state. If the RRC Release message includes the PTM configuration for the RRC inactive state, the UE 100 continues to receive the same multicast session.

Service continuity of the multicast session needs to be ensured during/after transition of the RRC state. Therefore, the UE 100 needs to apply the PTM configuration of a multicast inactive MRB before temporarily suspending the multicast MRB. The UE 100 starts receiving the multicast inactive MRB as soon as the PTM configuration is applied. This can keep multicast reception from being interrupted when the UE transitions from the RRC connected state to the RRC inactive state.

### (3.1) Overview of Operation of UE

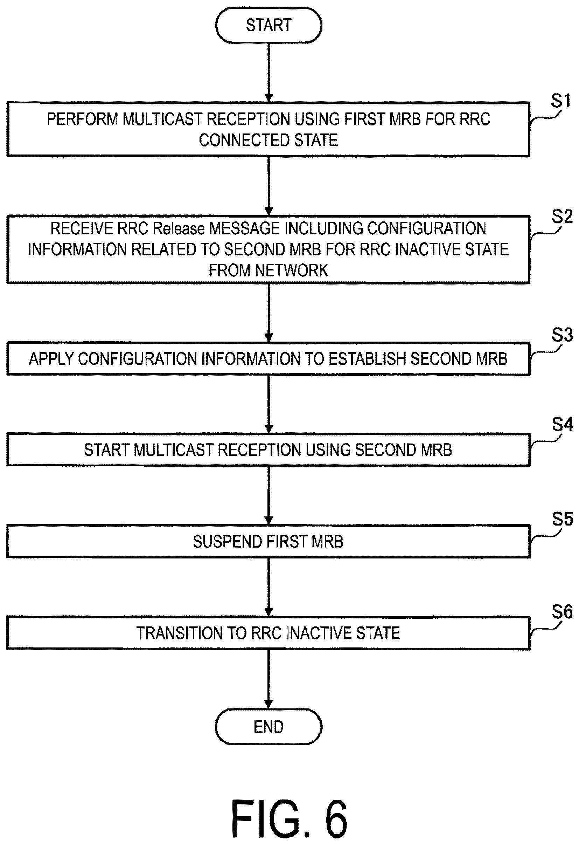

FIG. 6 is a diagram illustrating an overview of an operation of the UE 100 related to the first operation pattern according to an embodiment. In step S1 to step S5 of FIG. 6, the UE 100 is assumed to be in the RRC connected state.

In step S1, the UE 100 receives a multicast session (referred to as "multicast session #1") from the network 5 (gNB 200) using a first MRB (multicast MRB) for the RRC connected state.

In step S2, the UE 100 receives, from the network 5 (gNB 200), an RRC Release message (i.e., RRC Release message including a suspend configuration) for causing the UE 100 to transition to the RRC inactive state. The RRC Release message includes configuration information (PTM configuration) indicating the configuration of a second MRB (multicast inactive MRB) used for receiving the multicast session #1 in the RRC inactive state. Note that the suspend configuration is an information element indicating a configuration for the RRC inactive state.

In step S3, the UE 100 establishes the second MRB by applying the configuration information (PTM configuration) of step S2 before suspending the first MRB in response to the reception of the RRC Release message. Step S3 may be performed before applying the suspend configuration. Step S3 may be performed when applying the suspend configuration.

In step S4, the UE 100 starts receiving the multicast session #1 using the second MRB established in step S3. For example, the UE 100 starts receiving the second MRB (to be specific, the MTCH corresponding to the second MRB) immediately after applying the PTM configuration.

In step S5, the UE 100 suspends the first MRB. In particular, the UE 100 stops using the first MRB while maintaining the configuration of the first MRB. In this way, by suspending the first MRB after the second MRB is established, the multicast reception can be kept from being interrupted. Note that the UE 100 may suspend the first MRB after confirming that the reception of the multicast session #1 (that is, the reception of the MBS data) has been started via the second MRB. Such confirmation of the reception start (reception start success) may be performed in a lower layer (for example, the PDCP layer), and the RRC layer may be notified of the confirmation result. If the start of reception is not confirmed within a certain period of time, the UE 100 may determine that a reception error has occurred in the multicast session #1 or may suspend the first MRB thereafter. Upon detection of a reception error, the UE 100 may attempt to transition to the RRC connected state again (to be specific, transmit an RRC Resume Request).

In step S6, the UE 100 transitions from the RRC connected state to the RRC inactive state. The UE 100 in the RRC inactive state can continue receiving the multicast session #1 using the second MRB.

According to the operation, the multicast reception can be kept from being interrupted when the UE 100 in multicast reception in the RRC connected state transitions from the RRC connected state to the RRC inactive state.

### (3.2) Example of Operation Sequence

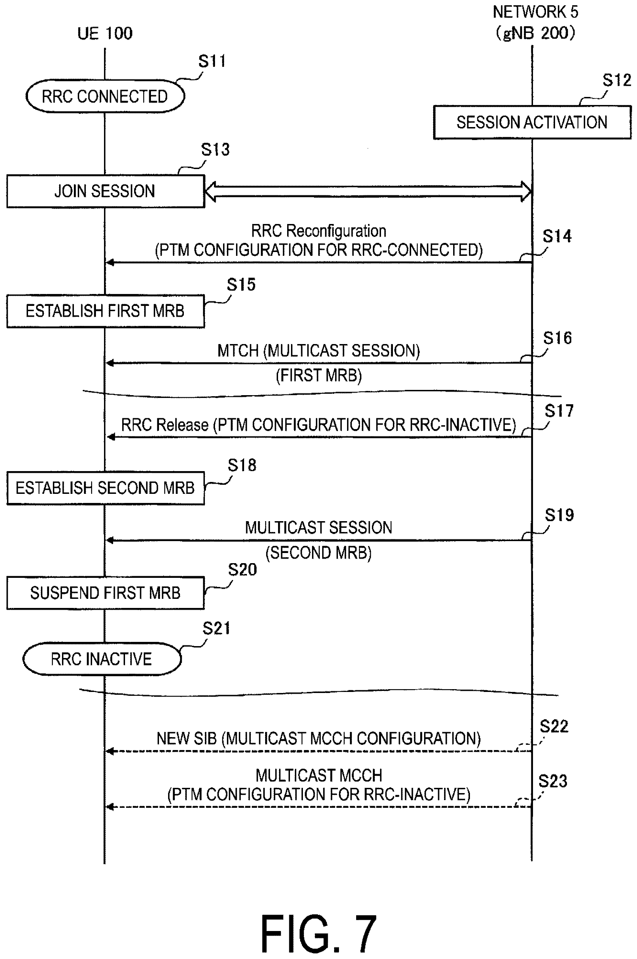

FIG. 7 is a diagram illustrating an example of an operation sequence of the mobile communication system 1 related to the first operation pattern according to an embodiment.

In step S11, the UE 100 is in the RRC connected state in a cell of the gNB 200.

In step S12, the network 5 activates a multicast session #1. Note that step S12 may be performed after step S13, after step S14, or after step S15.

In step S13, the UE 100 in the RRC connected state joins the multicast session #1.

In step S14, the gNB 200 transmits an RRC Reconfiguration message including the PTM configuration for RRC-connected to the UE 100. The UE 100 in the RRC connected state receives the RRC Reconfiguration message.

In step S15, the UE 100 in the RRC connected state applies the PTM configuration for RRC-connected of step S14 to establish a first MRB (multicast MRB) with the gNB 200.

In step S16, the gNB 200 transmits MBS data (multicast data) of the multicast session #1 to the UE 100 on the MTCH by using the first MRB. The UE 100 in the RRC connected state receives the multicast data.

Then, in step S17, the gNB 200 transmits an RRC Release message including a suspend configuration to the UE 100. The UE 100 in the RRC connected state receives the RRC Release message. The RRC Release message further includes a PTM configuration for RRC-inactive. The PTM configuration for RRC-inactive may be included in the suspend configuration. The PTM configuration may be an information element different from the suspend configuration.

In step S18, the UE 100 in the RRC connected state applies the PTM configuration for RRC-inactive of step S17 to establish a second MRB (multicast inactive MRB) with the gNB 200.

In step S19, the gNB 200 transmits MBS data (multicast data) of the multicast session #1 to the UE 100 on the MTCH by using the second MRB. The UE 100 in the RRC connected state receives the multicast data. At this point, the UE 100 may perform both multicast reception using the first MRB and multicast reception using the second MRB. Upon receiving the same multicast data in both the first MRB and the second MRB, the UE 100 may discard the multicast data of one side.

In step S20, the UE 100 in the RRC connected state suspends the first MRB.

In step S21, the UE 100 transitions from the RRC connected state to the RRC inactive state.

Thereafter, when the PTM configuration for RRC-inactive is likely to be updated, the UE 100 may receive a new SIB from the gNB 200 (step S22) and receive a multicast MCCH from the gNB 200 (step S23). Note that, although an example in which the RRC Release message includes the PTM configuration for RRC-inactive in step S17 has been described, while not limited thereto. In step S17, the UE 100 may receive the PTM configuration for RRC-inactive on the MCCH. The UE 100 may receive the RRC Release message (may not include the PTM configuration for RRC-inactive).

### (4) Second Operation Pattern

Hereinafter, the second operation pattern related to multicast reception in the RRC inactive state will be described focusing on the difference from the above-described first operation pattern. Note that overlapping description of operations similar to the above-described first operation pattern will be omitted.

The first operation pattern described above is based on the assumption of a scenario in which a multicast session has been activated at the time when the UE 100 receives an RRC Release message. In contrast, in the second operation pattern, a scenario in which the multicast session is not activated yet at the time when the UE 100 receives an RRC Release message is mainly assumed.

For deactivated multicast sessions, the UE 100 can be configured with PTM configuration (MBSMulticastInactiveConfiguration) by the RRC Release message. In the first operation pattern described above, the UE 100 that has received the RRC Release message applies the PTM configuration and immediately starts receiving the MTCH. If the multicast session is deactivated, the UE 100 does not start the process of receiving the MTCH since the MTCH is not transmitted at that time. In this case, even if the UE 100 attempts multicast reception (MTCH reception), the UE 100 cannot receive the MTCH and consumes power wastefully.

Therefore, in the second operation pattern, the network 5 notifies the UE 100 that the multicast session (to be specific, the multicast session that the UE 100 is joining) is still deactivated. For example, the gNB 200 notifies the UE 100 of whether the multicast session is activated through an RRC Release message so that the UE 100 does not receive a corresponding MTCH. This allows the UE 100 to wait for, for example, a multicast session activation notification (group notification) without starting receiving the MTCH.

That is, in the second operation pattern, first, the UE 100 in the RRC connected state receives, from the gNB 200, the RRC Release message including the configuration information (PTM configuration for RRC-inactive) used for receiving the multicast session in the RRC inactive state to cause the UE 100 to transition to the RRC inactive state. Second, the UE 100 checks whether the multicast session has been activated. Third, when the multicast session has not been activated, the UE 100 suspends execution of predetermined processing for starting receiving the multicast session.

### (4.1) Overview of Operation of UE

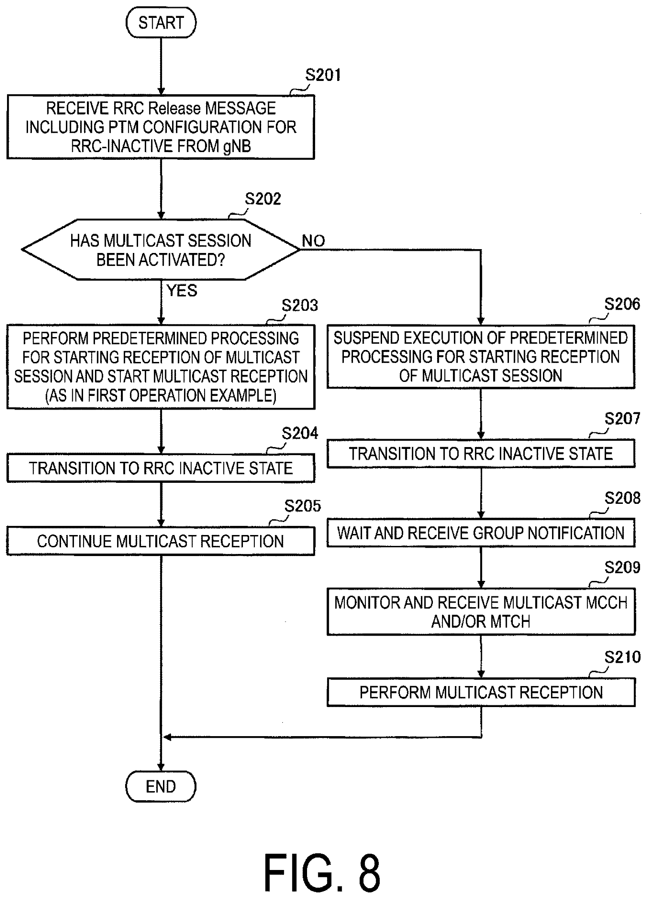

FIG. 8 is a diagram illustrating an overview of an operation of the UE 100 related to the second operation pattern according to an embodiment. Here, the UE 100 is assumed to have already joined the multicast session #1.

In step S201, the UE 100 in the RRC connected state receives, from the gNB 200, the RRC Release message including the configuration information (PTM configuration for RRC-inactive) used for receiving the multicast session #1 in the RRC inactive state to cause the UE 100 to transition to the RRC inactive state. In the second operation pattern, the RRC Release message includes session state information indicating whether the multicast session #1 has been activated.

The session state information may indicate that the multicast session #1 has been activated (that is, not deactivated). The session state information may indicate that the multicast session #1 has not been activated (that is, deactivated). The session state information may be information indicating whether information (which may be a PTM configuration for RRC-inactive) described below is immediately applied (that is, whether predetermined processing is applied or only held). Alternatively, the session state information may be information indicating whether to immediately start MTCH reception.

The configuration information (PTM configuration for RRC-inactive) in the RRC Release message may include, as predetermined information associated with the multicast session #1, at least one selected from the group consisting of a session identifier (TMGI) associated with the multicast session #1, an MRB identifier associated with the multicast session #1, and an MTCH configuration associated with the multicast session #1. The MTCH configuration is a configuration related to MTCH reception, and includes, for example, at least one selected from the group consisting of a group identifier (G-RNTI), a discontinuous reception configuration (DRX configuration or scheduling information: MTCH transmission ON time, MTCH transmission cycle, reference time and time offset, HARQ retransmission configuration), a layer 2 configuration (PDCP configuration or RLC configuration), and a physical channel configuration (PDCCH configuration, PDSCH configuration, SSB mapping configuration).

In the RRC Release message, the session state information is associated with predetermined information. This allows the UE 100 to identify which multicast session has been activated based on the predetermined information and the session state information.

In step S202, the UE 100 in the RRC connected state checks whether the multicast session #1 has been activated based on the session state information in the RRC Release message. Alternatively, when the UE 100 has acquired information on whether the multicast session #1 had been activated from the CN 20, the UE 100 may check whether the multicast session #1 has been activated based on the information from the CN 20.

When the multicast session #1 has been activated (step S202: YES), the UE 100 in the RRC connected state performs the same operation as that in the first operation pattern described above in step S203. Specifically, the UE 100 performs predetermined processing for starting reception of the multicast session #1. The predetermined processing includes at least one selected from the group consisting of processing of applying the configuration information (PTM configuration for RRC-inactive) (including processing for establishing the second MRB) and processing of starting reception of the MTCH (that is, processing of starting multicast reception using the second MRB). The predetermined processing may include processing of receiving the multicast MCCH and/or processing of receiving a new SIB for transmitting configuration information (multicast MCCH configuration) used for receiving the multicast MCCH.

After the predetermined processing is performed, in step S204, the UE 100 transitions from the RRC connected state to the RRC inactive state. In step S 205, the UE 100 in the RRC inactive state continues receiving the multicast session #1.

On the other hand, when the multicast session #1 has not been activated (step S202: NO), in step S206, the UE 100 suspends execution of the predetermined processing for starting the reception of the multicast session #1. For example, the UE 100 in the RRC connected state does not perform processing of applying the configuration information (PTM configuration for RRC-inactive) (including processing for establishing the second MRB) and/or processing of starting reception of the MTCH (that is, processing of starting multicast reception using the second MRB). Note that the UE 100 may perform processing of storing (holding) the configuration information in its own memory.

After suspending execution of the predetermined processing, in step S207, the UE 100 transitions from the RRC connected state to the RRC inactive state. In step S208, the UE 100 in the RRC inactive state waits for a paging message for notifying of the activation of the multicast session #1 (that is, a group notification) and receives the group notification.

Upon receiving the group notification, in step S209, the UE 100 in the RRC inactive state performs processing of monitoring and receiving a predetermined logical channel. The predetermined logical channel is a multicast MCCH for transmitting configuration information used for receiving the multicast session #1 in the RRC inactive state and/or an MTCH for transmitting the multicast session #1. Here, the UE 100 may read the configuration information from the memory and apply the configuration information. In step S 210, the UE 100 in the RRC inactive state receives the multicast session #1 transmitted on the MTCH.

### (4.2) Example of Operation Sequence

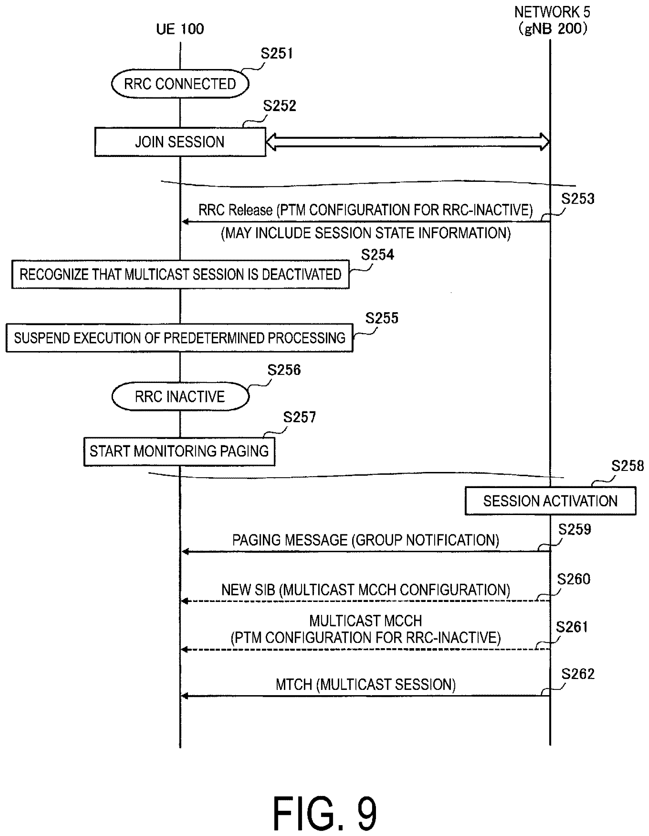

FIG. 9 is a diagram illustrating an example of an operation sequence of the mobile communication system 1 related to the second operation pattern according to an embodiment.

In step S251, the UE 100 is in the RRC connected state in a cell of the gNB 200.

In step S252, the UE 100 in the RRC connected state joins the multicast session #1. Here, the UE 100 joins the multicast session #1 through communication (e.g., NAS signaling) with the CN 20. At this time, the UE 100 may acquire information on whether the multicast session #1 has been activated from the CN 20 (e.g., the AMF 300A).

In step S253, the gNB 200 transmits an RRC Release message including a suspend configuration to the UE 100. The UE 100 in the RRC connected state receives the RRC Release message. The RRC Release message further includes the PTM configuration for RRC-inactive of the multicast session #1. The PTM configuration for RRC-inactive may be included in the suspend configuration. The PTM configuration may be an information element different from the suspend configuration.

In the second operation pattern, the RRC Release message may include the session state information indicating whether the multicast session #1 has been activated. That is, when setting the PTM configuration for the UE 100 using the RRC Release message, the gNB 200 performs notification of whether the multicast session #1 corresponding to the PTM configuration is in the active state (that is, an ongoing state) or the deactivated state (that is, an activation-waiting state). The notification may be performed for each TMGI, each MRB, or each PTM configuration (MTCH configuration). Here, the description will be made assuming that the multicast session #1 has not been activated.

In step S254, the UE 100 recognizes that the multicast session #1 is in the deactivated state based on the information from the CN 20 and/or the session state information in the RRC Release message.

In step S255, the UE 100 suspends execution of predetermined processing for starting reception of the multicast session #1. For example, the UE 100 does not apply but holds the PTM configuration for RRC-inactive. Alternatively, the UE 100 may apply the PTM configuration but may not perform the MTCH reception. The UE 100 may not perform processing of receiving the multicast MCCH and a new SIB.

In step S256, the UE 100 transitions from the RRC connected state to the RRC inactive state.

In step S257, the UE 100 in the RRC inactive state starts monitoring a paging message for performing notification of the activation of the multicast session #1 (that is, a group notification).

Then, in step S258, the network 5 activates the multicast session #1.

In step S259 the gNB 200 transmits a paging message for performing notification of activation of the multicast session #1 (i.e., a group notification). The group notification includes the session identifier (TMGI) of the multicast session #1. The UE 100 in the RRC connected state receives the group notification and confirms that the group notification includes the session identifier of the multicast session #1 which the UE has already joined.

In step S260, the gNB 200 may transmit a new SIB including the configuration of the multicast MCCH. The UE 100 in the RRC inactive state may acquire (receive) the new SIB in response to the reception of the group notification in step S259.

In step S261, the gNB 200 may transmit the multicast MCCH including the PTM configuration for RRC-inactive of the multicast session #1. The UE 100 in the RRC inactive state may acquire (receive) the multicast MCCH based on the new SIB of step S260.

In step S262, the gNB 200 transmits MBS data (multicast data) of the multicast session #1 to the UE 100 on the MTCH. The UE 100 in the RRC inactive state receives the multicast data (MTCH) based on the PTM configuration for RRC-inactive of step S253 and/or the PTM configuration for RRC-inactive of step S261.

### (5) Third Operation Pattern

Hereinafter, the third operation pattern related to multicast reception in the RRC inactive state will be described focusing on the difference from the above-described operation patterns. The third operation pattern can be implemented in combination with the above-described operation patterns. Note that overlapping description of operations similar to the above-described operation patterns will be omitted.

As described in the operation pattern 2, the multicast session #1 may be deactivated when the UE 100 in the RRC connected state joining the multicast session #1 sets the PTM configuration for RRC-inactive in the RRC Release message. In such a scenario (hereinafter, also referred to as a "scenario 1"), when the multicast session #1 is activated after the UE 100 transitions to the RRC inactive state, the PTM configuration for RRC-inactive may be modified. In this case, the UE 100 needs to update the held PTM configuration for RRC-inactive to a new PTM configuration for RRC-inactive. In this case, the UE 100 acquires a new PTM configuration for RRC-inactive by receiving the multicast MCCH, and receives the activated multicast session #1 on the MTCH based on the new PTM configuration for RRC-inactive.

Alternatively, as described in the above operation pattern 1, a scenario in which the UE 100 that has transitioned to the RRC inactive state is receiving the activated (i.e., ongoing) multicast session #1 on the MTCH is assumed. In such a scenario (hereinafter, also referred to as a "scenario 2"), the network 5 may modify the PTM configuration for RRC-inactive of the ongoing multicast session #1. In this case, the UE 100 acquires a new PTM configuration for RRC-inactive by receiving the multicast MCCH, and receives the ongoing multicast session #1 on the MTCH based on the new PTM configuration for RRC-inactive.

In such scenarios 1 and 2, as in the MBS broadcast, it is conceivable to notify the UE 100 in the RRC inactive state of the update of the multicast MCCH information (PTM configuration for RRC-inactive) by using MCCH Change Notification for MBS multicast. The UE 100 cannot identify the MBS session to be a target of the update of the PTM configuration for RRC-inactive only by using the MCCH Change Notification.

Therefore, in the scenario 1, even when the UE 100 in the RRC inactive state receives the multicast MCCH in response to the reception of the MCCH Change Notification, the PTM configuration for RRC-inactive of the multicast session #1 that the UE is interested in receiving may not be included in the received multicast MCCH. Similarly, in the scenario 2, even when the UE 100 in the RRC inactive state receives the multicast MCCH in response to the reception of the MCCH Change Notification, the PTM configuration for RRC-inactive of the multicast session #1 being received by the UE may not be changed in the received multicast MCCH. Therefore, since the reception of the multicast MCCH may be wasted, a problem exists from a viewpoint of reducing the power consumption of the UE 100.

The UE 100 that is receiving or interested in receiving the multicast session #1 needs to receive and decode the PDCCH at least once every MCCH modification period in order to receive the MCCH Change Notification in the RRC inactive state. Therefore, a problem exists from a viewpoint of reducing the power consumption of the UE 100.

In order to solve the above-described problems, a group notification (that is, a paging message including a session identifier) is used in the operation pattern 3. The UE 100 in the RRC inactive state is receiving (monitoring) paging messages in its paging occasions, regardless of whether it is receiving (or interested in receiving) a multicast session. For this reason, by notifying the UE 100 of the change of the multicast MCCH (PTM configuration for RRC-inactive) using the group notification, the UE 100 can receive (monitor) the multicast MCCH more efficiently than when the MCCH Change Notification is used.

### (5.1) Overview of Operation of UE

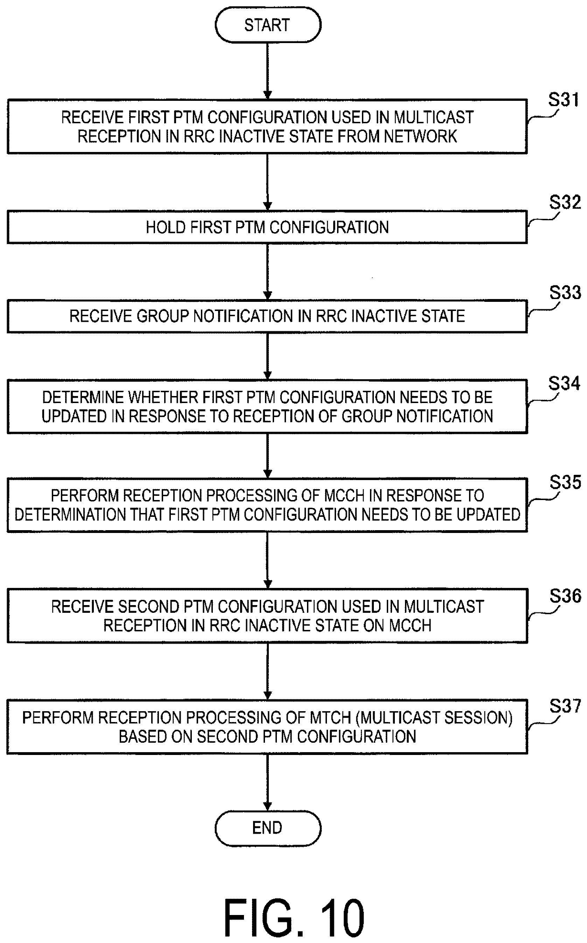

FIG. 10 is a diagram illustrating an overview of an operation of the UE 100 related to a third operation pattern according to an embodiment. In step S31 and step S32 of FIG. 10, the UE 100 is assumed to be in the RRC connected state or the RRC inactive state. In step S33 to step S37 of FIG. 10, the UE 100 is assumed to be in the RRC inactive state.

In step S31, the UE 100 receives, from the network 5, a first PTM configuration (hereinafter, also referred to as a "first PTM configuration for RRC-inactive") used for receiving the multicast session #1 in the RRC inactive state. For example, the UE 100 in the RRC connected state receives an RRC Release message including the first PTM configuration for RRC-inactive from the gNB 200. Alternatively, the UE 100 in the RRC inactive state receives a multicast MCCH including the first PTM configuration for RRC-inactive from the gNB 200. Although details will be described below, in the first operation example of the third operation pattern, the first PTM configuration for RRC-inactive of the multicast session #1 is associated with version information (hereinafter, also referred to as a "value tag").

In step S32, the UE 100 holds the first PTM configuration for RRC-inactive received in step S31. Here, when the multicast session #1 has not been activated, the UE 100 holds the first PTM configuration for RRC-inactive received in step S31 without applying the PTM configuration, similarly in the second operation pattern described above. On the other hand, when the multicast session #1 has been activated, the UE 100 holds the first PTM configuration for RRC-inactive received in step S31 while applying the PTM configuration, similarly in the first operation pattern described above. In this case, the UE 100 receives the multicast session #1 on the MTCH based on the first PTM configuration for RRC-inactive.

In step S33, the UE 100 in the RRC inactive state receives, from the network 5 (gNB 200), a paging message (i.e., a group notification) including the session identifier (TMGI) of the multicast session #1. Note that, in the technical specifications of 3GPP Release 17, since only the UE 100 in the RRC connected state can receive the MBS multicast, when the UE 100 in the RRC inactive state receives a paging message (group notification) including the session identifier of the multicast session #1 which the UE has already joined, the UE transitions to the RRC connected state in order to perform multicast reception. In contrast, in the present embodiment (third operation pattern), when the UE 100 in the RRC inactive state receives the paging message (group notification) including the session identifier of the multicast session #1 which the UE has already joined, the UE maintains the RRC inactive state without transitioning to the RRC connected state.

In step S34, the UE 100 in the RRC inactive state determines whether the update of the first PTM configuration for RRC-inactive held in step S32 is needed in response to the reception of the group notification of step S33.

In step S35, the UE 100 in the RRC inactive state performs reception processing for the multicast MCCH in response to the determination that the update of the first PTM configuration for RRC-inactive is necessary. The reception processing for the multicast MCCH may include reception of a new SIB and reception of the multicast MCCH.

In step S36, the UE 100 in the RRC inactive state receives (acquires) a second PTM configuration used for receiving the multicast session #1 (hereinafter also referred to as a second PTM configuration for RRC-inactive") on the multicast MCCH, and updates the first PTM configuration for RRC-inactive with the second PTM configuration for RRC-inactive.

In step S37, the UE 100 in the RRC inactive state receives the multicast session #1 on the MTCH based on the second PTM configuration for RRC-inactive.

In the first operation example of the third operation pattern, step S32 includes a step of holding the first PTM configuration for RRC-inactive in association with a value tag that is version information. Step S34 includes a step of receiving, from the network 5 (gNB 200), signaling including the latest value tag of the PTM configuration for RRC-inactive used for receiving the multicast session #1 and a step of determining whether the first PTM configuration for RRC-inactive needs to be updated by comparing the held value tag with the latest value tag. Here, the signaling including the latest value tag is a paging message (group notification) of step S33, a system information block type 1 (SIB1) transmitted from the network 5 (gNB 200), or a new SIB indicating the configuration of the multicast MCCH.

In the first operation example of the third operation pattern, step S34 may include a step of determining that the first PTM configuration for RRC-inactive needs to be updated when the latest value tag is not included in the signaling. Step S34 may include a step of determining that the first PTM configuration for RRC-inactive needs to be updated, based on the fact that the first PTM configuration for RRC-inactive is not included in the RRC Release message in step S31.

In a second operation example of the third operation pattern, step S34 may include a step of determining that the first PTM configuration for RRC-inactive needs to be updated, in response to the paging message (group notification) of step S33 or the new SIB including the PTM configuration update information for RRC-inactive. The update information may be 1-bit flag information. For example, in step S34, the UE 100 in the RRC inactive state may determine that the first PTM configuration for RRC-inactive needs to be updated in response to the group notification or the new SIB including the PTM configuration update information for RRC-inactive.

In the second operation example of the third operation pattern, the paging message (group notification) including the session identifier may include the UE identifier associated with the session identifier. In the group notification, the PTM configuration update information may be associated with the UE identifier. In the group notification, the PTM configuration update information may be associated with the session identifier. Alternatively, the new SIB may include the session identifier, and the PTM configuration update information may be associated with the session identifier in the new SIB.

### (5.2) First Operation Example

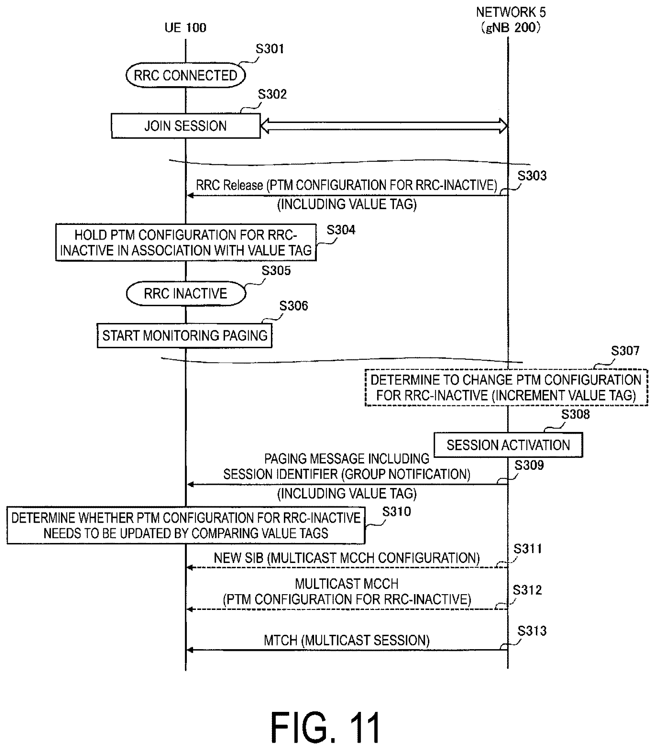

FIG. 11 is a diagram illustrating an example of the first operation example of the third operation pattern according to an embodiment. The operation example of FIG. 11 is premised on the scenario 1 using the second operation pattern described above. However, in the second operation pattern described above, it is assumed that the PTM configuration for RRC-inactive configured by the RRC Release message is not changed at the time of session activation for the deactivated multicast session #1. In contrast, in the operation example of FIG. 11, a case in which the PTM configuration for RRC-inactive configured by the RRC Release message is changed at the time of session activation (that is, a case requiring updating) is assumed. Note that overlapping description of operations similar to the above-described second operation pattern will be omitted.

In step S301, the UE 100 is in the RRC connected state in a cell of the gNB 200.

In step S302, the UE 100 in the RRC connected state joins the multicast session #1. Here, the UE 100 joins the multicast session #1 through communication (e.g., NAS signaling) with the CN 20. However, the network 5 has not yet activated the multicast session #1.

In step S303, the gNB 200 transmits an RRC Release message including a suspend configuration to the UE 100 in the RRC connected state. The UE 100 in the RRC connected state receives the RRC Release message. The RRC Release message further includes the PTM configuration for RRC-inactive (first PTM configuration) of the multicast session #1. The PTM configuration for RRC-inactive may be included in the suspend configuration. The RRC Release message may be an information element different from the suspend configuration. In this operation example, a value tag is set in the PTM configuration for RRC-inactive. The value tag may be included in the PTM configuration for RRC-inactive. The value tag may be an information element different from the PTM configuration for RRC-inactive.

In step S304, the UE 100 in the RRC connected state holds the PTM configuration for RRC-inactive received in step S303 in association with the value tag.

In step S305, the UE 100 transitions from the RRC connected state to the RRC inactive state.

In step S306, the UE 100 in the RRC inactive state starts monitoring paging. Specifically, the UE 100 in the RRC inactive state wakes up in its own paging occasion and monitors a paging channel (paging message).

In step S307, the gNB 200 may determine to change the PTM configuration for RRC-inactive of the multicast session #1 depending on the radio situation of its own cell. The gNB 200 increments (that is, adds 1 to) the value tag of the changed PTM configuration for RRC-inactive.

In step S308, the network 5 activates the multicast session #1.

In step S309, the gNB 200 transmits a paging message (group notification) including the session identifier of the multicast session #1. The UE 100 in the RRC inactive state receives the group notification from the gNB 200. The group notification may include a value tag associated with the current (latest) PTM configuration for RRC-inactive. Note that the value tag may exist for each session identifier (TMGI), each MRB identifier, or each PTM configuration.

The UE 100 in the RRC inactive state recognizes that the multicast session #1 which the UE joined has been activated, based on the session identifier included in the group notification. When the group notification includes the value tag associated with the session identifier, the UE 100 in the RRC inactive state acquires the value tag from the group notification. When the value tag is not included in the group notification, the UE 100 in the RRC inactive state may receive the SIB1 or a new SIB and acquire the value tag from the received SIB1 or new SIB. In this case, the SIB1 or the new SIB may include a set of the session identifier and the value tag.

In step S310, the UE 100 in the RRC inactive state compares the value tag of the PTM configuration for RRC-inactive held by the UE (set by the RRC Release message) with the value tag acquired in step S309.

Here, when the value tags match, the UE 100 applies the held PTM configuration for RRC-inactive if not applied, and starts receiving the MTCH of the multicast session #1. In this case, the UE 100 starts receiving the MTCH without receiving the multicast MCCH and/or a new SIB.

On the other hand, when the value tags do not match or when no value tags can be acquired (not provided), the UE 100 recognizes that the PTM configuration for RRC-inactive has been updated, and receives the multicast MCCH (and a new SIB as necessary) (step S311 and step S312). Here, the UE 100 may acquire a new SIB for receiving the multicast MCCH (step S311). The UE 100 receives the multicast MCCH (step S312), acquires and applies the latest PTM configuration for RRC-inactive (second PTM configuration) provided on the multicast MCCH, and starts receiving the MTCH of the multicast session #1 (step S313).

Note that, when the PTM configuration for RRC-inactive is not provided in the RRC Release message of step S303, the UE 100 may consider that the value tags do not match (the PTM configuration for RRC-inactive was updated) in step S310.

In step S313, the UE 100 in the RRC inactive state continues receiving the multicast session #1.

Note that, in the present operation example, the method for notifying of the value tags of the latest multicast MCCH has been described exemplifying three methods including the method of using the group notification, the method of using a new SIB, and the method of using the SIB1.

In the method of using the group notification, the UE 100 waiting for session activation monitors paging, and thus whether the PTM configuration for RRC-inactive has been updated with the lowest delay without additional power consumption can be confirmed.

The specifications of the method of using a new SIB are easily expanded, but since the UE 100 needs to monitor the new SIB, additional power consumption is needed to check whether the PTM configuration for RRC-inactive has been updated, and a delay until the new SIB is acquired also occurs. When the value tag of the multicast MCCH is changed, a certain degree of improvement can be made by adopting a rule that the value tag of a new SIB (the value tag notified in the SIB1) is updated. The UE 100 can check the SIB1 and determine that the value tag of the multicast MCCH has not changed if the value tag of the new SIB has not changed.

In the method of using the SIB1, the UE 100 always checks the SIB1, and thus whether the PTM configuration for RRC-inactive has been updated without extra power consumption can be confirmed. Increasing the message size of the SIB1 is generally not desirable.

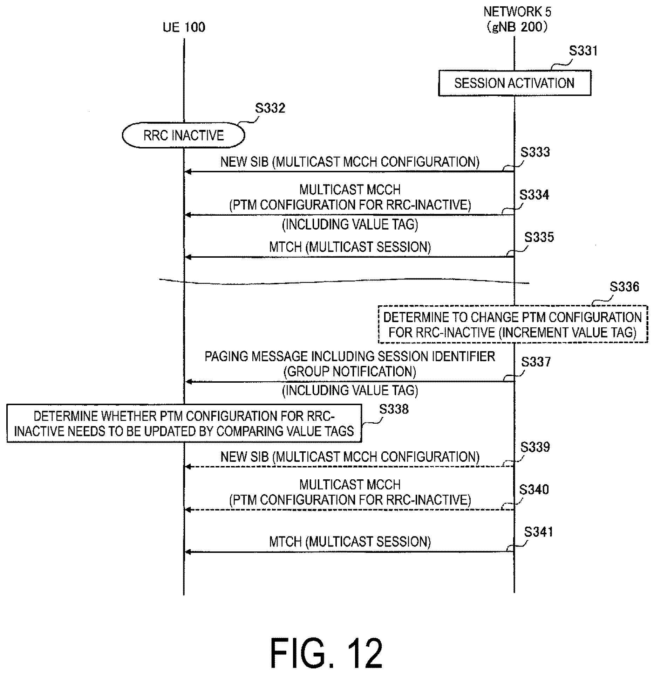

FIG. 12 is a diagram illustrating another example of the first operation example of the third operation pattern according to an embodiment. The present operation example is on the premise of the above-described scenario 2. Note that overlapping descriptions of operations similar to that in FIG. 11 will be omitted.

In step S331, the network 5 activates the multicast session #1.

In step S332, the UE 100 transitions from the RRC connected state to the RRC inactive state.

In step S333, the gNB 200 transmits a new SIB including the configuration of the multicast MCCH. The UE 100 in the RRC inactive state receives the new SIB.

In step S334, the gNB 200 transmits the PTM configuration for RRC-inactive of the multicast session #1 on the multicast MCCH. The UE 100 in the RRC inactive state receives the PTM configuration for RRC-inactive based on the new SIB, and holds the received PTM configuration for RRC-inactive as a first PTM configuration. Here, the PTM configuration for RRC-inactive is associated with a value tag.

In step S335, the gNB 200 transmits MBS data of the multicast session #1 on the MTCH. The UE 100 in the RRC inactive state receives the MBS data of the multicast session #1 on the MTCH based on the PTM configuration for RRC-inactive.

In step S336, the gNB 200 may determine to change the PTM configuration for RRC-inactive of the multicast session #1 depending on the radio situation of its own cell. The gNB 200 increments (that is, adds 1 to) the value tag of the changed PTM configuration for RRC-inactive.

In step S337, the gNB 200 transmits a paging message (group notification) including the session identifier of the multicast session #1. The UE 100 in the RRC inactive state receives the group notification from the gNB 200. The group notification may include a value tag associated with the current (latest) PTM configuration for RRC-inactive. Note that the value tag may exist for each session identifier (TMGI), each MRB identifier, or each PTM configuration.

When the group notification includes the value tag associated with the session identifier, the UE 100 in the RRC inactive state acquires the value tag from the group notification. When the value tag is not included in the group notification, the UE 100 in the RRC inactive state may receive the SIB1 or a new SIB and acquire the value tag from the received SIB1 or new SIB. In this case, the SIB1 or the new SIB may include a set of the session identifier and the value tag.

In step S338, the UE 100 in the RRC inactive state compares the value tag of the PTM configuration for RRC-inactive held by the UE (set in step S334) with the value tag acquired in step S337.

Here, when the value tags match, the UE 100 maintains the held PTM configuration for RRC-inactive and continues receiving the MTCH of the multicast session #1 (step S341).

On the other hand, when the value tags do not match or when no value tags can be acquired (not provided), the UE 100 recognizes that the PTM configuration for RRC-inactive has been updated, and receives the multicast MCCH (and a new SIB as necessary) (step S339 and step S340). Here, the UE 100 may acquire a new SIB for receiving the multicast MCCH (step S339). The UE 100 receives the multicast MCCH (step S340), acquires and applies the latest PTM configuration for RRC-inactive (second PTM configuration) provided on the multicast MCCH, and continues receiving the MTCH of the multicast session #1 (step S341).

### (5.3) Second Operation Example

In the second operation example of the third operation pattern, PTM configuration update information that is 1-bit flag information is used instead of the value tags described above. The gNB 200 that changed the PTM configuration for RRC-inactive may notify the UE 100 of the change of the PTM configuration for RRC-inactive corresponding to the session identifier by transmitting the session identifier and the PTM configuration update information associated with the session identifier in the group notification or the new SIB. Alternatively, the gNB 200 that changed the PTM configuration for RRC-inactive may transmit the UE identifier and the PTM configuration update information associated with the UE identifier in the group notification, thereby notifying the UE 100 indicated by the UE identifier of the change of the PTM configuration for RRC-inactive.

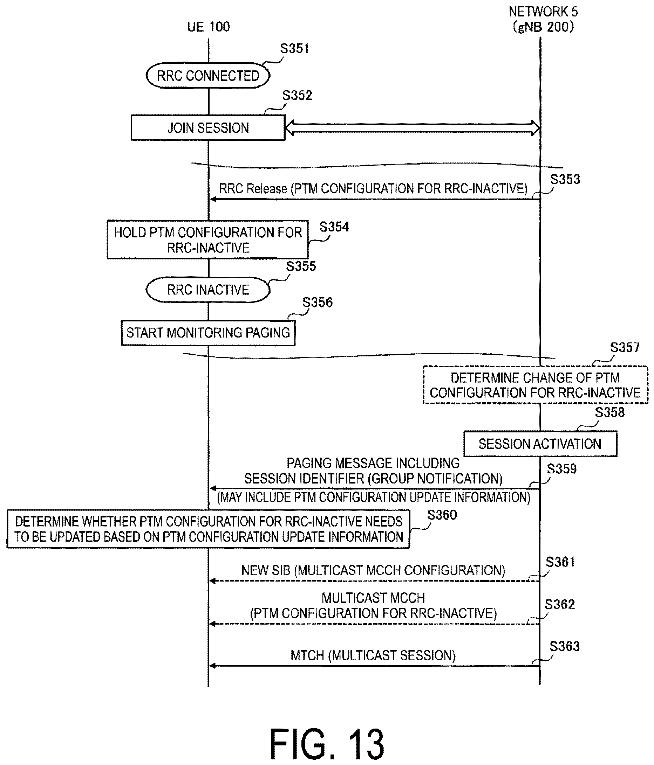

FIG. 13 is a diagram illustrating an example of the second operation example of the third operation pattern according to an embodiment. The operation example of FIG. 13 is premised on the scenario 1 using the second operation pattern described above. However, in the second operation pattern described above, it is assumed that the PTM configuration for RRC-inactive configured by the RRC Release message is not changed at the time of session activation for the deactivated multicast session #1. In contrast, the operation example of FIG. 13 assumes that the PTM configuration for RRC-inactive configured by the RRC Release message is changed at the time of session activation (that is, updating is needed). Note that overlapping description of operations similar to the above-described second operation pattern will be omitted.

In step S351, the UE 100 is in the RRC connected state in a cell of the gNB 200.

In step S352, the UE 100 in the RRC connected state joins the multicast session #1. Here, the UE 100 joins the multicast session #1 through communication (e.g., NAS signaling) with the CN 20. However, the network 5 has not yet activated the multicast session #1.

In step S353, the gNB 200 transmits an RRC Release message including a suspend configuration to the UE 100 in the RRC connected state. The UE 100 in the RRC connected state receives the RRC Release message. The RRC Release message further includes the PTM configuration for RRC-inactive (first PTM configuration) of the multicast session #1. The PTM configuration for RRC-inactive may be included in the suspend configuration. The PTM configuration may be an information element different from the suspend configuration.

In step S354, the UE 100 in the RRC connected state holds the PTM configuration for RRC-inactive received in step S353.

In step S355, the UE 100 transitions from the RRC connected state to the RRC inactive state.

In step S356, the UE 100 in the RRC inactive state starts monitoring paging.

In step S357, the gNB 200 may determine to change the PTM configuration for RRC-inactive of the multicast session #1 depending on the radio situation of its own cell.

In step S358, the network 5 activates the multicast session #1.

In step S359, the gNB 200 transmits a paging message (group notification) including the session identifier of the multicast session #1.

To change the PTM configuration, the gNB 200 includes 1-bit PTM configuration update information in the group notification together with the session identifier (and the UE identifier). The PTM configuration update information may be information indicating whether update of the PTM configuration for RRC-inactive has been made. The PTM configuration update information may be information indicating whether multicast MCCH acquisition is needed. In the group notification, the PTM configuration update information may be associated with the session identifier (or UE identifier). For example, the group notification may include the PTM configuration update information in units of entries of a Paging Group List that is a list of session identifiers. The group notification may include the PTM configuration update information in units of entries of an aging Record List that is a list of UE identifiers. Note that the PTM configuration update information may be configured by a bitmap, and each bit of the bitmap may in the form of referring to (pointing to) each entry (that is, each UE identifier or each session identifier) of the Paging Record List or the Paging Group List.

In step S360, the UE 100 in the RRC inactive state may recognize that the multicast session #1 which the UE joined has been activated, based on the session identifier included in the group notification. When the group notification includes the PTM configuration update information associated with the session identifier, the UE 100 may determine that the PTM configuration of the multicast session #1 needs to be updated. When the group notification includes the same UE identifier as the UE identifier of the UE 100 and the PTM configuration update information associated with the UE identifier, the UE 100 may determine that the PTM configuration (the PTM configuration of the multicast session #1) held by itself needs to be updated.

Here, when the PTM configuration update information is not included in the group notification, the UE 100 in the RRC inactive state applies the held PTM configuration for RRC-inactive if the PTM configuration for RRC-inactive is not applied, and starts receiving the MTCH of the multicast session #1 (step S363). In this case, the UE 100 starts receiving the MTCH without receiving the multicast MCCH and/or a new SIB.

On the other hand, when the group notification includes the PTM configuration update information, the UE 100 in the RRC inactive state recognizes that the PTM configuration for RRC-inactive has been updated, and receives the multicast MCCH (and a new SIB as necessary) (step S361 and step S362). The UE 100 acquires and applies the latest PTM configuration for RRC-inactive from the received multicast MCCH and starts receiving the MTCH of the multicast session #1 (step S363).

Note that, in this operation example, when the RRC Release message of step S353 does not include the PTM configuration for RRC-inactive, the UE 100 may consider that the PTM configuration for RRC-inactive has been updated even if the PTM configuration update information is not included in the group notification.

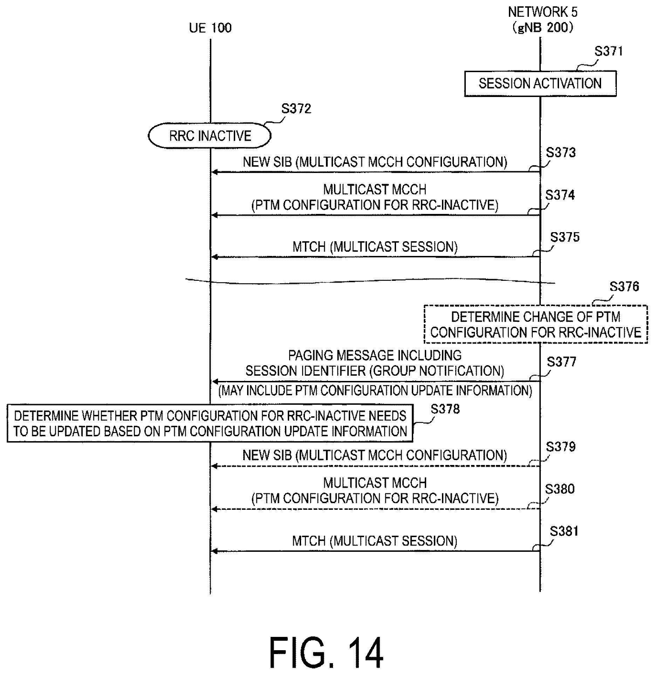

FIG. 14 is a diagram illustrating another example of the second operation example of the third operation pattern according to an embodiment. The present operation example is on the premise of the above-described scenario 2. Note that overlapping descriptions of operations similar to that in FIG. 13 will be omitted.

In step S371, the network 5 activates the multicast session #1.

In step S372, the UE 100 transitions from the RRC connected state to the RRC inactive state.

In step S373, the gNB 200 transmits a new SIB including the configuration of the multicast MCCH. The UE 100 in the RRC inactive state receives the new SIB.

In step S374, the gNB 200 transmits the PTM configuration for RRC-inactive of the multicast session #1 on the multicast MCCH. The UE 100 in the RRC inactive state receives the PTM configuration for RRC-inactive based on the new SIB, and holds the received PTM configuration for RRC-inactive as a first PTM configuration.

In step S375, the gNB 200 transmits MBS data of the multicast session #1 on the MTCH. The UE 100 in the RRC inactive state receives the MBS data of the multicast session #1 on the MTCH based on the PTM configuration for RRC-inactive.

In step S376, the gNB 200 may determine to change the PTM configuration for RRC-inactive of the multicast session #1 depending on the radio situation of its own cell. The gNB 200 increments (that is, adds 1 to) the value tag of the changed PTM configuration for RRC-inactive.

In step S377, the gNB 200 transmits a paging message (group notification) including the session identifier of the multicast session #1. To change the PTM configuration, the gNB 200 includes 1-bit PTM configuration update information in the group notification together with the session identifier (and the UE identifier). The description about the PTM configuration update information is the same as that of the operation of FIG. 13.

In step S378, when the group notification includes the PTM configuration update information associated with the session identifier of the multicast session #1, the UE 100 may determine that the PTM configuration of the multicast session #1 needs to be updated. When the group notification includes the same UE identifier as the UE identifier of the UE 100 and the PTM configuration update information associated with the UE identifier, the UE 100 may determine that the PTM configuration (the PTM configuration of the multicast session #1) held by itself needs to be updated.

When the PTM configuration update information is not included in the group notification, the UE 100 maintains the held PTM configuration for RRC-inactive and continues receiving the MTCH of the multicast session #1 (step S381).

On the other hand, when the group notification includes the PTM configuration update information, the UE 100 recognizes that the PTM configuration for RRC-inactive has been updated, and receives the multicast MCCH (and a new SIB as necessary) (step S379 and step S380). Here, the UE 100 may acquire a new SIB for receiving the multicast MCCH (step S379). The UE 100 receives the multicast MCCH (step S380), acquires and applies the latest PTM configuration for RRC-inactive (second PTM configuration) provided on the multicast MCCH, and continues receiving the MTCH of the multicast session #1 (step S381).

### (6) Other Embodiments

Although the multicast reception in the RRC inactive state has been mainly described in the above-described embodiments, the operations according to the above-described embodiments may also be applied to multicast reception in the RRC idle state. With respect to the RRC idle state, the above-described RRC resume (Resume) can be read as RRC establishment (Establishment).

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The functions achieved by the UE 100 or the gNB 200 (the network node) may be implemented in a circuitry or a processing circuitry programmed to perform the described functions, including a general-purpose processor, a special-purpose processor, an integrated circuit, application specific integrated circuits (ASICs, a central processing unit (CPU)), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variations can be made without departing from the gist of the present disclosure.

This application claims priority to US Provisional Patent Application No. 63/494316 (filed on April 5, 2023), the contents of which are incorporated herein by reference in their entirety.

### (7) Supplement A

Features relating to the embodiments described above are described below as supplements.

### (Supplement 1)

A communication method performed by a user equipment in a mobile communication system that provides a multicast/broadcast service (MBS), the communication method including, receiving a first PTM configuration from a network, the first PTM configuration being used for reception of a multicast session in a Radio Resource Control (RRC) inactive state, and holding the first PTM configuration;
determining, in the RRC inactive state, whether the first PTM configuration needs to be updated in response to reception of a paging message from the network, the paging message including a session identifier of the multicast session; and
acquiring, in the RRC inactive state, a second PTM configuration used for reception of the multicast session by receiving a multicast control channel (MCCH) for multicast communication in response to determination that the first PTM configuration needs to be updated.

### (Supplement 2)

The communication method described in supplement 1, further including:
receiving, in an RRC connected state, an RRC Release message that causes the user equipment to transition to the RRC inactive state; and
transitioning from the RRC connected state to the RRC inactive state in response to the reception of the RRC Release message,
in which the RRC Release message includes the first PTM configuration.

### (Supplement 3)

The communication method described in supplement 1 or 2, in which
the holding includes holding the first PTM configuration in association with version information, and
the determining includes
receiving signaling from the network, the signaling including latest version information of a PTM configuration used for reception of the multicast session, and
determining whether the first PTM configuration needs to be updated by comparing the held version information with the latest version information.

### (Supplement 4)

The communication method described in supplement 3, in which the signaling is the paging message.

### (Supplement 5)

The communication method described in supplement 3, in which the signaling is a system information block type 1 transmitted from the network.

### (Supplement 6)

The communication method described in supplement 3, in which the signaling is a system information block (SIB) indicating a configuration of the MCCH for the multicast communication.

### (Supplement 7)

The communication method described in any one of supplements 3 to 6, in which the determining includes determining that the first PTM configuration needs to be updated when the signaling does not include the latest version information.

### (Supplement 8)

The communication method described in any one of supplements 1 to 7, further including: receiving, in an RRC connected state, an RRC Release message that causes the user equipment to transition to the RRC inactive state; and
transitioning from the RRC connected state to the RRC inactive state in response to the reception of the RRC Release message,
in which the determining includes determining that the first PTM configuration needs to be updated based on the first PTM configuration not being comprised in the RRC Release message.

### (Supplement 9)

The communication method described in supplement 1 or 2, in which the determining includes determining that the first PTM configuration needs to be updated in response to the paging message or system information block including PTM configuration update information.

### (Supplement 10)

The communication method described in supplement 9, in which
the paging message includes a user equipment identifier associated with the session identifier, and
in the paging message, the PTM configuration update information is associated with the user equipment identifier.

### (Supplement 11)

The communication method described in supplement 9, in which, in the paging message, the PTM configuration update information is associated with the session identifier.

### (Supplement 12)

The communication method described in supplement 9, in which
the system information block includes the session identifier, and
in the system information block, the PTM configuration update information is associated with the session identifier.

### (Supplement 13)

A user equipment used in a mobile communication system that provides a multicast/broadcast service (MBS), the user equipment including a controller configured to perform
processing of receiving a first PTM configuration from a network, the first PTM configuration being used for reception of a multicast session in a Radio Resource Control (RRC) inactive state, and holding the first PTM configuration;
processing of determining, in the RRC inactive state, whether the first PTM configuration needs to be updated in response to reception of a paging message from the network, the paging message including a session identifier of the multicast session; and
processing of acquiring, in the RRC inactive state, a second PTM configuration used for reception of the multicast session by receiving a multicast control channel (MCCH) for multicast communication in response to determination that the first PTM configuration needs to be updated.

### (8) Supplement B

### 1. Introduction

Work items about enhancement of the MBS (eMBS) are intended to support multicast reception by the UE in the inactive state and described as follows.
- To define support for multicast reception by the UE in the RRC inactive state [RAN 2, RAN 3]
- A PTM configuration for the UE that receives multicast in the RRC inactive state [RAN 2]
- To investigate influences of mobility and state transitions of the UE that receives multicast in the RRC inactive state (seamless/lossless mobility is not required) [RAN 2, RAN 3]

RAN 2 has discussed this purpose and reached a series of agreements. Based on these agreements, the aspects of notification of multicast reception in the inactive state and RRC state transition have been discussed in the supplements.

### 2. Discussion

In RAN2#119e, further study is needed for RRC state change.

In Rel-18, multicast reception of a UE in an inactive state supports at least the following scenarios on the premise that the UE already has a valid PTM configuration.
- Scenario 1: Although the UE received multicast in the connected state, it enters the inactive state and continues receiving multicast.
- Scenario 2: The UE has joined a multicast session and has been induced to be inactive.

Further study is needed for a case in which a state changes, such as a case in which service provision in an inactive state ends.

A plurality of cases relating to the RRC state change are considered from viewpoints of network and UE. Some of the cases also relate to a notification transmitted from the network to the UE. Therefore, each case will be discussed below.

### 2.1. Case 1: deactivation/release of multicast session

RAN2#119bis-e has agreed to notify the UE of deactivation of a multicast session when it is deactivated, and the mechanism of Rel-17 is applied when the multicast session is released.
- When the UE is in the RRC-inactive and is configured to receive the multicast session in the RRC-inactive, if the multicast session is deactivated, the UE is notified of the deactivation. The details thereof require further study. For example, methods (e.g., notification via a group paging, an MCCH, or other methods) need to be further studied.
- The Rel-17 mechanism (NAS-based indication) is applicable for multicast session release. When functional expansion is needed, further studies are necessary.

It is considered that, when the UE in the inactive state is receiving the MBS service, the multicast session is stopped or released, and the gNB stops the transmission of the PTM/MTCH accordingly. In this case, the UE has no reason for continuing monitoring the MTCH; however, as long as the PTM configuration is not deleted, the UE needs to monitor the MTCH. From the viewpoint of power saving of the UE, it is desirable to stop monitoring the MTCH as soon as possible.

Observation 1: The continuation of monitoring the PTM/MTCH by the UE even after the multicast session is stopped or released is inefficient from the viewpoint of power consumption of the UE.

That is, when receiving a notification of deactivation of a multicast session whatever notification method is used, the UE is eligible to be permitted to stop monitoring the MTCH. When receiving such a notification, the UE needs to remain in the RRC inactive state.

Proposal 1: RAN2 needs to agree that, when receiving a multicast session deactivation notification, the UE can stop monitoring the MTCH.

For deactivation of the multicast session, RAN2 needs to further study a method for notifying the UE of the deactivation, for example, by group paging, the MCCH, or other methods.

According to LTE SC-PTM, to perform a notification that the UE stops monitoring a PDCCH of a G-RNTI, an SC-PTM Stop Indication MAC CE is introduced, and the MAC CE is multiplexed on an SC-MTCH associated with the G-RNTI. This light-weight signaling may function under restriction of one-to-one mapping between the TMGI and the G-RNTI. On the other hand, since an NR MBS allows many-to-one mapping between the TMGI and the G-RNTI, the deactivated TMGI needs to be indicated when the MAC CE is introduced. Since the MAC CE is transmitted together with the MTCH, it is expected that delay from reception of the last multicast data to stop of MTCH monitoring can be minimized.

Another option is to reuse the group paging. The group paging is used to simultaneously page a plurality of UEs in a group using the TMGI instead of a UE-ID. Since the existing paging group list (i.e., a list of TMGIs) can be applied to legacy UEs, the group paging needs to add a new TMGI list for deactivation notification to avoid the influence on the legacy UEs. Since the group paging is transmitted in a paging occasion, some degree of delay occurs from the reception of the last multicast data to the stop of the MTCH monitoring based on an I-DRX cycle.

The third option is to reuse the MCCH. There are two methods of performing notification of stop of a multicast session: deleting the PTM configuration of the stopped TMGI and adding a new indication for performing notification of the stopped TMGI. Since the MCCH needs to be updated in any case, an MCCH change notification needs to be transmitted to the UE in advance. Hence, a longer delay is required from when the last multicast data is received until when the MTCH monitoring is stopped.

According to the agreement of RAN 2 "the MCCH is used when the PTM configuration needs to be changed", it can be interpreted that the UE in the inactive state needs to wake up in the MCCH, and the stop of the multicast session is regarded as a kind of "change of the PTM configuration". Thus, when the corresponding PTM configuration is deleted from the MCCH, the UE may be aware that the multicast session has been deactivated. However, it takes time for the UE to stop monitoring the MTCH. Therefore, a notification by the MAC CE is desirable.

In summary, the delay from the reception of the last multicast data to the stop of the MTCH monitoring may directly affect an increase in unnecessary power consumption of the UE. From the viewpoint of power saving of the UE, a notification needs to be transmitted as soon as possible, the first option of using the MAC CE is a desirable solution.

Proposal 2: RAN 2 needs to agree that, when the multicast session is deactivated, the UE in the inactive state is notified of a new MAC CE (like the existing SC-PTM Stop Indication).

As for release of a multicast session, an NAS-based indication of Rel-17 agreed by RAN 2 applies, which may indicate that "a multicast session has been requested through release of a network or an MBS session". This procedure assumes that the UE is paged by the gNB and transitions to the RRC connected state to communicate with the AMF. In this procedure, it is assumed that existing group paging (or legacy individual paging) can be reused.

That is, the gNB transmits the MAC CE to allow the UE to stop monitoring the MTCH, then the gNB can distribute the timing of the pages to the UE (i.e., using legacy individual paging), thereby being able to avoid signaling storms caused by transitioning simultaneously to the RRC state.

Proposal 3: RAN 2 needs to agree that function extension specialized in multicast session release is not necessary, i.e., the UE transitions to the RRC connected state by using existing (group) paging.

### 2.2. Case 2: Case of Selective Transition during Activation of Multicast Session

RAN 2#119e has reached the following agreement relating to case 2.
- Whether the UE (or UEs) can receive a multicast session in the inactive state depends on gNB. Further study is needed as to what information is to be provided to the gNB in order to make the decision (related to the discussion of SA2).
- The gNB supports UEs both in the connected state and the inactive state in the same cell as to transmitting one multicast session. How the gNB configures this support needs to be further studied.
- It is assumed that a network can select a UE to receive a multicast session in the RRC inactive state and in the RRC connected state and can cause the UE to shift between states for reception of multicast services.

When gNB releases the UE to be inactive, the gNB can select the UE to release in the same manner as the present one, that is, in RRC Release with Suspend Config, based on UE capabilities, UE assistance information, and/or CN assistance information (when defined). Therefore, with respect to RRC release messages, no functional extension for selective transitions of the UE is foreseen.

Observation 2: The existing RRC Release is used by the gNB to select which UE to release.

For activation of a multicast session, RAN 2 #119bis-e has agreed on the following items.
- When a Rel-18 session is activated, the UE in the inactive state can be notified (details need to be further studied).
- As a baseline, group paging can be used to notify a Rel-18 UE of activation of a session (e.g., further study is necessary for details of an operation of the UE or the like when the UE receives such a group notification).
- A method for a UE to determine whether the UE can receive a multicast session in the RRC inactive state when the session has been activated needs further study in consideration of the following solutions (the description can be further updated as needed; several solutions may be necessary; and solutions applied only to specific configuration options also exist).

1. When a multicast session is activated, if the PTM configuration used in the RRC inactive state for the session can be used by the UE and the UE already joins the session (such as a configuration provided to the UE via dedicated RRC signaling or an MCCH), the UE can receive the multicast session in the RRC inactive state, otherwise returns to the RRC connected state and receives the multicast session.
2. When a multicast session is activated, whether the UE can receive the multicast session in the RRC inactive state is indicated by using group paging (detailed signaling needs to be further studied).
3. The UE is configured with "whether the UE can receive a multicast session in the RRC inactive state" through dedicated signaling before the UE is released. Once a multicast session is activated, the UE remains in the RRC inactive state or resumes RRC connection in response to the activation (detailed signaling needs to be further studied).

In Rel-17, activation of the multicast session is provided as notification through group paging. Since it is not necessary to be different from the legacy mechanism in Rel-18, RAN 2 needs to check whether group paging is used in notification of multicast session activation.

Proposal 4: RAN2 needs to check whether group paging can be used to notify the Rel-18 UE of activation of a session.

In addition to the checking, RAN2 has specified three options for the operation of the UE when receiving a multicast activation notification as mentioned above.

In option 1, the UE can receive a multicast session in the inactive state if the UE has made a valid PTM configuration. The UE in the inactive state cannot receive a multicast session without the PTM configuration, which can be considered to be a baseline for all other operations of the UE. Hence, option 1 needs to be agreed upon.

Proposal 5: RAN2 needs to agree on option 1 for the operation of the UE "when a multicast session is activated, if the PTM configuration used in the RRC inactive state for the session can be used by the UE and the UE already joined the session (such as a configuration provided to the UE via dedicated RRC signaling or an MCCH), the UE can receive the multicast session in the RRC inactive state, otherwise returns to the RRC connected state and receives the multicast session".

For option 2, the UE is indicated of whether to receive the multicast session in the inactive state at the time of receiving group paging.

For option 3, the UE is indicated in advance of whether to receive a multicast session in the inactive state by using an RRC reconfiguration or RRC Release.

The mechanisms of these two options are very similar except for a message indicating to do so to the UE. Therefore, these options can be analyzed from the viewpoint of the motivations for multicast reception in the inactive state, that is, network congestion and power saving of the UE.

For the network congestion, a cell load is assumed to change from time to time. According to option 2, since the indication is transmitted in group paging, the gNB can consider the latest load situation when determining whether the UE needs to remain in the inactive state. On the other hand, according to option 3, since the gNB needs to predict a future load when providing an indication to the UE, a possibility exists in which the cell load changes when the gNB actually transmits group paging. Therefore, there exists risk that the number of UEs that transition to the connected state increases even when congestion worsens, or the number of UEs that remain in the inactive state increases even when the congestion is resolved. Therefore, option 2 is desirable to efficiently control the RRC state of the UE.

From the viewpoint of power saving of the UE, some "power saving preference" is assumed to be introduced into the UE assistance information. Such a preference indication can only be transmitted from UEs in the connected state and not transmitted to UEs in the inactive state. Hence, the gNB can indicate to the UE whether the UE that was previously in the connected state is permitted to receive a multicast session in the inactive state. When such a preference indication is not introduced, since the gNB does not know whether the UE prefers power saving, the gNB can indicate this to the UE at any time. That is, it can be said that no difference exists between option 2 and option 3.

In light of the above analysis, option 2 is considered to be more efficient and can cover the usage of option 3. Therefore, RAN 2 needs to agree on at least option 2.

Proposal 6: RAN 2 needs to agree on option 2 for the operation of the UE "when a multicast session is activated, the UE is indicated through group paging as of whether it can receive a multicast session in the RRC inactive state (detailed signaling needs to be further studied)".

Specifically, when the paging message includes a TMGI of interest, all UEs start the RRC resume procedure, and therefore when the selective paging is necessary for option 2, the gNB cannot include the TMGI in the paging message. When the gNB includes only the UE-ID for selective paging (i.e., legacy individual paging that is for paging the selected Rel-18 UE and does not include the TMGI), the Rel-17 UE that waits for activation of multicast in the inactive state cannot be paged. This is also inefficient in terms of signaling overhead.

That is, when the paging message includes the TMGI of interest, all UEs transition to the RRC connected state.

Assuming that a current paging group list is configured in a group paging message for paging at least the Rel-17 UE, the Rel-18 UE is also paged through the TMGI of interest. In order that the selected UE does not transition to the C connected state, it is considered to define a "paging cancel list" (or "inactive permission list") that is a new list of UE-IDs to cause the UE listed on this list to remain in the inactive state to receive the multicast session.

Hence, RAN 2 needs to discuss a method for enhancing group paging to page a subset of UEs.

Proposal 7: RAN 2 needs to discuss a method for enhancing group paging for paging a subset of UEs using, for example, a new UE-ID list for remaining in the inactive state for reception of a multicast session.

### 2.3. Case 3: Implementation of QoS

RAN 2 #119e has reached the following agreement relating to case 3.
- HARQ feedback and PTP are not supported in multicast reception of the RRC inactive state.

According to the agreement, the multicast reception in the inactive state is the same as and/or similar to the MBS broadcast reception defined in Rel-17 (so-called delivery mode 2). The MBS broadcast is of the best-effort type.

On the other hand, ensuring QoS/reliability is an important task for the multicast session. SA2 has also questioned whether there exists a difference in the quality/reliability of the multicast reception between the connected state and the inactive state, and RAN2 #119bis-e has agreed on the following answers.

RAN2 (Q1-a) A case where there exists a significant difference in qualities and reliability of MBS data reception between a UE in the RRC connected state and a UE in the RRC inactive state:
The qualities and the reliability of the MBS data reception between the UE in the RRC connected state and the UE in the RRC inactive state may be different because HARQ feedback and PTP transmission are not supported, and seamless/lossless mobility is not required for multicast reception in the RRC inactive state.

RAN 2 #119e has proposed to introduce threshold values for reception quality such as RSRP and BLER, which are considered to be used to ensure a certain level of QoS requirement for multicast reception. The threshold values are also useful for the network to manage the QoS requirements. When the multicast reception in the inactive state does not meet the corresponding QoS requirement, the UE needs to transition to the connected state to ensure reception quality and use the HARQ feedback/retransmission and/or the PTP (or split MRB).

Observation 4: Even when the UE is in the inactive state, the multicast session needs to ensure certain QoS requirements.

Regarding the threshold values for RSRP, since the NR MBS assumes single-cell transmission, it is considered that the UE needs to always transition to the connected state every time the UE moves to a cell edge or performs cell reselection. This operation may not be an optimal operation depending on deployments from the viewpoint of the network congestion and the power saving of the UE.

The threshold values for BLER are considered to be simpler to ensure the QoS requirements. Therefore, these options need to be discussed to introduce transitions of RRC states based on reception qualities.

Proposal 8: RAN 2 needs to agree that, when the reception quality becomes worse than a threshold value (such as RSRP or BLER), the UE in the inactive state needs to transition to the connected state.

### 2.4. Case 4: Update of PTM configuration

In RAN2 #120, it was agreed to use the MCCH if the PTM configuration needs to be updated.

First, a "mixed approach" is taken to begin as follows:
1. When the NW configures the UE to continue multicast reception in the inactive state, the NW provides the PTM configuration for an activated multicast session through RRC dedicated signaling to at least a serving cell (other cases need to be further studied).
2. The MCCH is used when the PTM configuration needs to be changed or when the PTM configuration needs to be indicated during transition beyond the serving cell/gNB. The change of the session status and other indications need to be further studied.
3. Assume that the UE can receive the multicast service after joining the session.
4. Whether the MCCH configuration is initially provided to the UE through the dedicated signaling needs to be further studied.

RAN2 #121 agreed to use RRC release for the PTM configuration (even before activation of the session) and introduce a new MCCH (different from Rel-17 MCCH).
- Before receiving multicast in the RRC inactive state, the UE needs to join a multicast session.
- If the network is determined to be useful, the PTM configuration of the (single) serving cell is configured for the UE before the activation of the session, and when the session in which the UE can save the configuration is activated, the UE can apply the configuration to receive multicast in the inactive state without returning to the RRC connected state unless updated with the MCCH after the configuration.
- If the network configures multicast reception in the inactive state for the UE, the PTM configuration can be delivered using an RRC release message containing suspendconfig. No other dedicated RRC message is used to provide the PTM configuration of MBS multicast in the inactive state.
- A new MCCH logical channel for multicast the in inactive state is introduced (different from a broadcast MCCH).

According to these agreements, two cases exist for PTM configuration update.
- Case 1: Of a UE in the inactive state receiving an already activated multicast session;
- Case 2: Of a UE in the inactive state waiting for activation of a multicast session.
- Note: Case 2 can be further classified according to whether the PTM configuration was provided through RRC release.

In such a case, the solutions are desirably as common as possible.

Proposal 9: RAN2 needs to aim at a common solution for the notification of PTM configuration update, considering at least two cases: already activated sessions and sessions before activation.

That is, the UE cannot maintain the inactive state to acquire the updated PTM configuration. For this reason, when viewed from the UE in the inactive state, the new PTM configuration delivery method in Rel-18 is similar to the delivery mode 2 of Rel-17. In this case, it is considered reasonable to reuse the existing MCCH change notification to perform notification of the update of the PTM configuration.

MCCH Change Notification requires the UE to wake up once per MCCH change boundary, which creates additional burdens in addition to monitoring paging occasions. The MCCH change notification is not efficient, especially in case 2 above (i.e. the UE needs to monitor the MCCH change notification even if it only waits for the multicast session notification to see if the PTM configuration provided by the RRC release has been updated).

To solve such a problem, it is considered that group paging is enhanced for notification of PTM configuration update. The UE only needs to monitor the paging occasion to determine whether PTM configuration update has been performed, regardless of whether the UE is receiving a multicast session (i.e., case 1 or case 2 above). Therefore, RAN2 needs to agree to use group paging for this notification. For the details about functional expansion, further studies are required.

Proposal 10: RAN 2 needs to agree that, instead of the existing MCCH change notification, group paging is used for updating the PTM configuration.

### 2.5. Case 5: Service Continuity upon RRC Resumption

The possibility that a UE that has already received a multicast session in the inactive state (i.e., via a broadcast MRB or a new MRB for multicast reception in the inactive state) is paged and initiates an RRC Resume procedure needs to be considered. It is considered that, after transitioning to the connected state, the UE of course wants to continue to receive the same multicast session. However, in this case, the UE has two MRBs for the same multicast session, namely a broadcast MRB (or a new MRB) configured for multicast reception in the inactive state and a multicast MRB resumed for multicast reception in the connected state.

According to Rel-17, a multicast session can be received only via a multicast MRB configured by an RRC reconfiguration. On the other hand, according to Rel-18, it is considered that the UE can receive a multicast session via a broadcast MRB (or a new MRB) configured by RRC reconfiguration or a new MCCH.

The UE is considered to use the multicast MRB for reception after transitioning to the connected state (similar to Rel-17). How the UE switches these MRBs, when the UE discards the broadcast MRB (or new MRB), how the UE needs to operate when the multicast MRB is an AM MRB (i.e., from the viewpoint of the lossless principle), and the like are not clear. Therefore, RAN 2 needs to discuss the operation of the UE during RRC resumption from the viewpoint of processing of the MRB and service continuity of the multicast session.

Proposal 11: RAN 2 needs to discuss the operation of the UE during RRC resumption in continuous reception of the multicast session (such as processing of broadcast MRB and multicast MRB).

### REFERENCE SIGNS

1: Mobile communication system
5: Network
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method performed by a user equipment in a mobile communication system that provides a multicast/broadcast service (MBS), the communication method comprising:
determining, in a Radio Resource Control (RRC) inactive state, whether a predetermined condition is satisfied in response to reception of a paging message from the network, the paging message comprising a session identifier of a multicast session; and
acquiring, in the RRC inactive state, configuration information used for reception of the multicast session in the RRC inactive state by receiving a multicast control channel (MCCH) for multicast communication in response to the predetermined condition being satisfied.

2. The communication method according to claim 1, further comprising:
receiving, in an RRC connected state, an RRC Release message that causes the user equipment to transition to the RRC inactive state; and
transitioning from the RRC connected state to the RRC inactive state in response to the reception of the RRC Release message,
wherein the predetermined condition comprises a condition that the RRC Release message does not comprise the configuration information.

3. A communication method performed by a user equipment in a mobile communication system that provides a multicast/broadcast service (MBS), the communication method comprising:
receiving a first PTM configuration from a network, the first PTM configuration being used for reception of a multicast session in a Radio Resource Control (RRC) inactive state, and holding the first PTM configuration;
determining, in the RRC inactive state, whether the first PTM configuration needs to be updated in response to reception of a paging message from the network, the paging message comprising a session identifier of the multicast session; and
acquiring, in the RRC inactive state, a second PTM configuration used for reception of the multicast session by receiving a multicast control channel (MCCH) for multicast communication in response to determination that the first PTM configuration needs to be updated.

4. The communication method according to claim 3, further comprising:
receiving, in an RRC connected state, an RRC Release message that causes the user equipment to transition to the RRC inactive state; and
transitioning from the RRC connected state to the RRC inactive state in response to the reception of the RRC Release message,
wherein the RRC Release message comprises the first PTM configuration.

5. The communication method according to claim 3 or 4,
wherein the holding comprises holding the first PTM configuration in association with version information, and
the determining comprises
receiving signaling from the network, the signaling comprising latest version information of a PTM configuration used for reception of the multicast session, and
determining whether the first PTM configuration needs to be updated by comparing the held version information with the latest version information.

6. The communication method according to claim 5, wherein the signaling is the paging message.

7. The communication method according to claim 5, wherein the signaling is a system information block type 1 transmitted from the network.

8. The communication method according to claim 5, wherein the signaling is a system information block (SIB) indicating a configuration of the MCCH for the multicast communication.

9. The communication method according to claim 5, wherein the determining comprises determining that the first PTM configuration needs to be updated when the signaling does not comprise the latest version information.

10. The communication method according to claim 3, further comprising:
receiving, in an RRC connected state, an RRC Release message that causes the user equipment to transition to the RRC inactive state; and
transitioning from the RRC connected state to the RRC inactive state in response to the reception of the RRC Release message,
wherein the determining comprises determining that the first PTM configuration needs to be updated based on the first PTM configuration not being comprised in the RRC Release message.

11. The communication method according to claim 3 or 4, wherein the determining comprises determining that the first PTM configuration needs to be updated in response to the paging message or system information block comprising PTM configuration update information.

12. The communication method according to claim 11,
wherein the paging message comprises a user equipment identifier associated with the session identifier, and
in the paging message, the PTM configuration update information is associated with the user equipment identifier.

13. The communication method according to claim 11, wherein, in the paging message, the PTM configuration update information is associated with the session identifier.

14. The communication method according to claim 11,
wherein the system information block comprises the session identifier, and
in the system information block, the PTM configuration update information is associated with the session identifier.

15. A user equipment used in a mobile communication system that provides a multicast/broadcast service (MBS), the user equipment comprising a controller configured to perform:
processing of receiving a first PTM configuration from a network, the first PTM configuration being used for reception of a multicast session in a Radio Resource Control (RRC) inactive state, and holding the first PTM configuration;
processing of determining, in the RRC inactive state, whether the first PTM configuration needs to be updated in response to reception of a paging message from the network, the paging message comprising a session identifier of the multicast session; and
processing of acquiring, in the RRC inactive state, a second PTM configuration used for reception of the multicast session by receiving a multicast control channel (MCCH) for multicast communication in response to determination that the first PTM configuration needs to be updated.
